# EUROPEAN PATENT SPECIFICATION

(11) **EP 2 181 147 B1**
(45) Date of publication and mention of the grant of the patent: **11.01.2017**
(21) Application number: 07796023.5
(22) Date of filing: 11.06.2007
(51) Int. Cl.: C08K 3/22, C08K 9/06

(54) **POLYMER COMPOSITIONS CONTAINING SURFACE-MODIFIED NON-HALOGENATED MINERAL FILLERS**
OBERFLÄCHEMODIFIZIERTER HALOGENFREIER MINERALISCHER FÜLLSTOFF
COMPOSITIONS POLYMÈRES CONTENANT DES CHARGES MINÉRALES NON HALOGÉNÉES À SURFACE MODIFIÉE

(30) Priority: 13.06.2006 US 451656
(43) Date of publication of application: 05.05.2010
(73) Proprietor: Momentive Performance Materials Inc., Waterford, NY 12188 (US)
(72) Inventor: RAMDATT, Philbert, E, New York, NY 10019 (US)
(74) Representative: Laufhütte, Dieter
(86) International application number: PCT/US2007/013786
(87) International publication number: WO 2007/146289

(56) References cited:
- WO-A-01/98403
- WO-A-99/05688
- US-A- 4 711 673

## Description

### BACKGROUND OF THE INVENTION

### Field of the Invention

The invention relates to polymer compositions containing surface-modified non-halogenated mineral fillers and their use in a variety of applications including wire cabling and furniture.

### Description of the Prior Art

Particulate mineral fillers, such as magnesium hydroxide and aluminum hydroxide, are widely used as non-halogenated flame retardants in a variety of hydrophobic polymers, particularly olefin-based polymers, e.g., polyethylene and polypropylene.

It is known that since these mineral fillers are hydrophilic in nature, there is a poor interaction between the mineral filler and the hydrophobic polymer. This poor interaction causes problems in the mechanical and physical properties of polymers incorporating these mineral fillers. Some of these physical problems are evidenced by reduced tensile stress and modulus, increased elongation (i.e., strain), and increased melt flow properties.

These problems are exacerbated by the fact that the mineral fillers are typically used in high amounts, i.e., exceeding fifty percent by weight of polymer. At such high amounts of incorporation, these mineral fillers dominate the chemical and mechanical properties of the polymer even further.

To mitigate these problems, particulate mineral fillers have often been surface-treated with surface modifiers to make them more compatible with the polymer base. Some of the surface modifiers which have been used include fatty acids, maleic anhydride-modified polymers, organosilanes, and silicones.

For example, Published PCT Application No. WO/9905688 to Eduardo et al., U.S. Patent No. 6,576,160 to Eichler et al., U.S. Published Application No. 2004/0127602 to Schaeling et al., and U.S. Patent No. 6,924,334 to Fukatani et al., disclose particulate magnesium hydroxide surface-treated with a variety of surface modifiers, including silanes.

However, there remains a need for particulate mineral fillers, and particularly magnesium hydroxide mineral fillers, which have been modified in such a way that they can be incorporated in polymers in flame-retarding amounts while imparting less or none of the above-described undesirable physical effects. There is also a need for increasing the weight percentages of mineral fillers in such polymers without the usual worsening of physical properties.

In addition, the mineral fillers currently used in the art, whether surface-modified or not, are typically highly hygroscopic, and accordingly, absorb significant amounts of water during storage and processing. The water absorbed in these mineral fillers cause further problems in the physical properties of polymers into which these water-adsorbed mineral fillers are incorporated. Therefore, there is also a particular need for polymers containing mineral fillers more resistant to the absorption of water.

### BRIEF DESCRIPTION OF THE INVENTION

It has been surprisingly found that, by an unexpected synergistic effect between short-chain organosilane surface modifiers containing hydrocarbon groups of from one to three carbon atoms and long-chain organosilane surface modifiers containing hydrocarbon groups of from eight to twelve carbon atoms, within a critical molar ratio of short-chain organosilano groups to long-chain organosilano groups on the surface of the mineral filler, the chemical properties of mineral fillers can be significantly improved as compared to the chemical properties of such mineral fillers surface-modified by only one of either a short-chain organosilane or long-chain organosilane. The improved mineral fillers, when incorporated into a polymer, impart a significant improvement in the physical properties of the filled polymer as compared to polymers having a mineral filler surface-modified with only one of either a short-chain or long-chain organosilane.

More specifically, an embodiment of the present invention is directed a polymer composition comprising an olefin-derived polymer component and a surface-modified non-halogenated mineral filler composition comprising a particulate mineral filler core comprising hydroxide groups bound to divalent or trivalent metal ions, said particulate mineral filler core having on its surface (i) one or more short-chain organosilano groups independently selected from the group consisting of CH3-Si(ORa)(ORb)(ORc), CH3CH2Si(ORa)(ORb) (ORc), CH3CH2CH2-Si(ORa)(ORb)(ORc), CH3CH(CH3)Si(ORa)(ORb)(ORc), (CH3)2Si(ORa)(ORb), (CH3CH2)2Si(ORa)(ORb), (CH3CH2CH2)2Si(ORa) (ORb), (CH3CH(CH3))2Si(ORa)(ORb), (CH3)3Si(ORa), (CH3CH2)3Si(ORa), (CH3CH2CH2)3Si(ORa), (CH3CH(CH3))3Si(ORa), (CH3)(CH3CH2)Si(ORa) (ORb), (CH3)(CH3CH2CH2)Si(ORa)(ORb), (CH3)(CH3CH(CH3))Si(ORa)(ORb), (CH3CH2)(CH3CH2CH2)Si(ORa)(ORb), (CH3CH2)(CH3CH(CH3))Si(ORa) (ORb), (CH3)(CH3CH2)2Si(ORa), (CH3)(CH3CH2CH2)2Si(ORa), (CH3) (CH3CH(CH3))2Si(ORa), (CH3)2(CH3CH2)Si(ORa), (CH3)2(CH3CH2CH2)Si(ORa), (CH3)2(CH3CH(CH3))Si(ORa), (CH3CH2)2(CH3CH2CH2)Si(ORa), (CH3CH2)2(CH3CH(CH3))Si(ORa), CH3-Si(ORa)CI2, CH3CH2Si(ORa)(02CR)(ORc), and CH3CH2CH2-Si(ORa)(NR2)(ORc); and (ii) one or more long-chain organosilano groups independently selected from the group consisting of CH3(CH2)7-Si(ORa) (ORb)(ORc), CH3(CH2)8Si(OR3)(ORb)(ORc), CH3(CH2)9-Si(ORa)(ORb)(ORc), CH3(CH2),0 Si(ORa)(ORb)(ORc), (CH3(CH2)7)2Si(ORa)(ORb), CH3(CH2)7 Si(ORa) (ORb)(CI), CH3(CH2)7-Si(ORa)(ORb)(NHCH3), CH3(CH2)7 Si(0Ra)(0Rb)(02CCH3), and CH3(CH2)"-Si(ORa)(ORb)(ORc); wherein each occurrence of Ra, Rb, Rc is independently selected from the group consisting of a divalent or trivalent metal atom on the surface of the particulate mineral filler core, a silicon atom in another organosilano group, hydrogen, and R, wherein R is a hydrocarbon group containing one to six carbon atoms; and wherein the long-chain organosilano groups are present in an amount of equal to or greater than three mole percent and up to fifty-five mole percent of combined molar amount of long-chain and short-chain organosilano groups.

The present invention advantageously allows for non-halogenated mineral filler compositions, such as magnesium hydroxide, to be included in polymer compositions in flame-retarding effective amounts while mitigating or preventing the known deleterious physical effects of these mineral fillers on such polymers. These improved mineral fillers will also allow for increases in their weight percentages in such polymers without the usual worsening of physical properties.

### BRIEF DESCRIPTION OF THE DRAWINGS

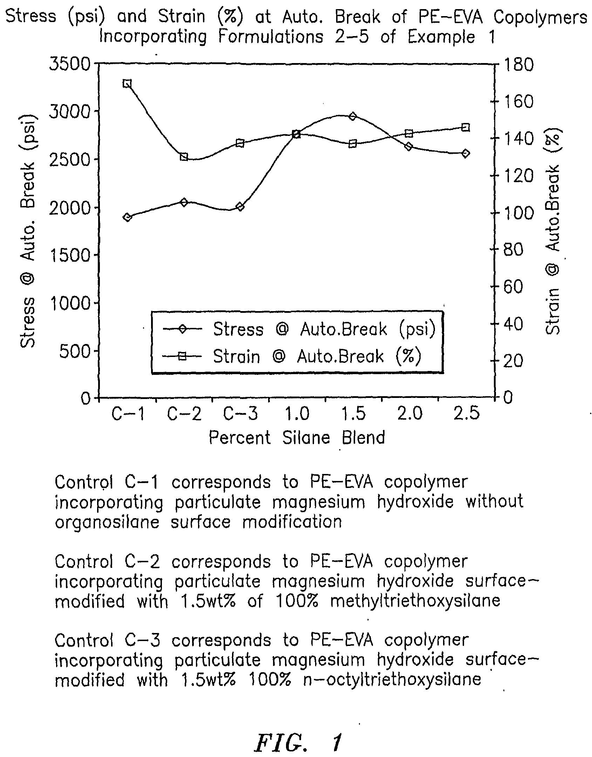

Figure 1 shows variation of tensile stress at auto break (psi) and elongation at auto break (% strain) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 4-7 having Mg(OH)₂ surface-modified with 1.0wt%, 1.5wt%, 2.0wt%, and 2.5wt%, respectively, of a 50:50 wt% blend of n-octyltriethoxysilane to methyltriethoxysilane (corresponding to 39-40 mole% of n-octyltriethoxysilane).

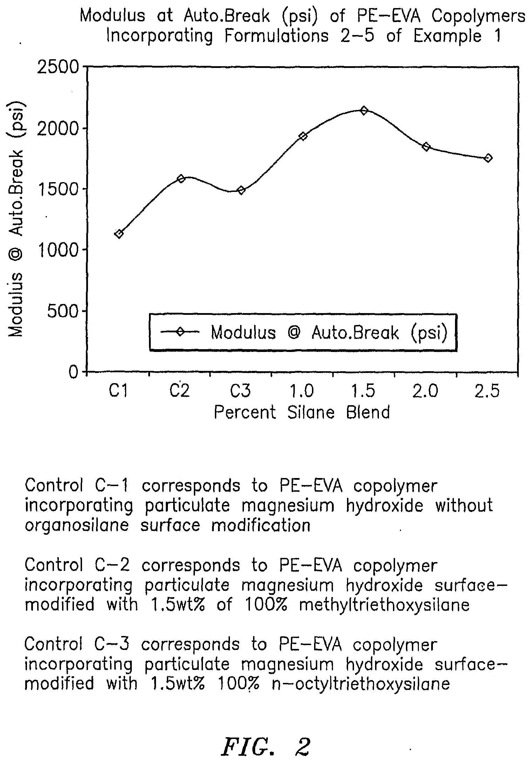

Figure 2 shows variation of modulus at auto break of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 4-7 having Mg(OH)₂ surface-modified with 1.0wt%, 1.5wt%, 2.0wt%, and 2.5wt%, respectively, of a 50:50 wt% blend of n-octyltriethoxysilane to methyltriethoxysilane (corresponding to 39-40 mole% of n-octyltriethoxysilane).

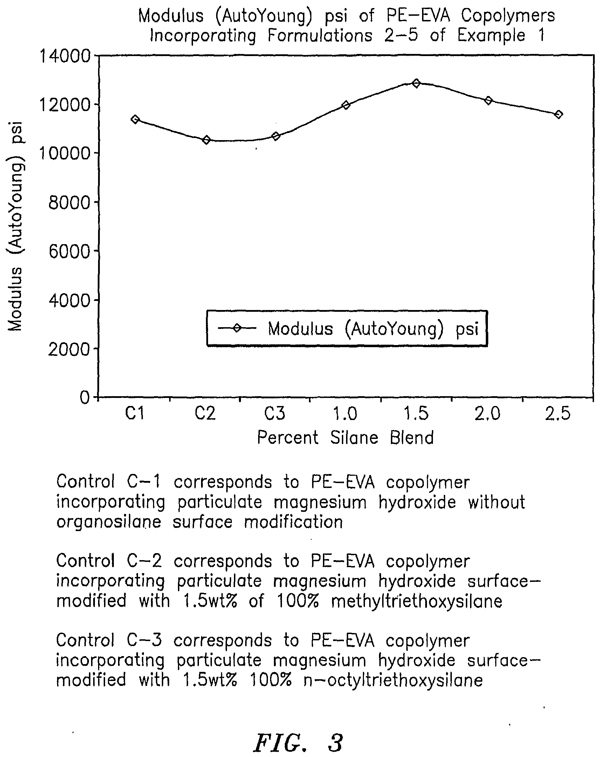

Figure 3 shows variation of Auto Young's modulus of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 4-7 having Mg(OH)₂ surface-modified with 1.0wt%, 1.5wt%, 2.0wt%, and 2.5wt%, respectively, of a 50:50 wt% blend of n-octyltriethoxysilane to methyltriethoxysilane (corresponding to 39-40 mole% of n-octyltriethoxysilane).

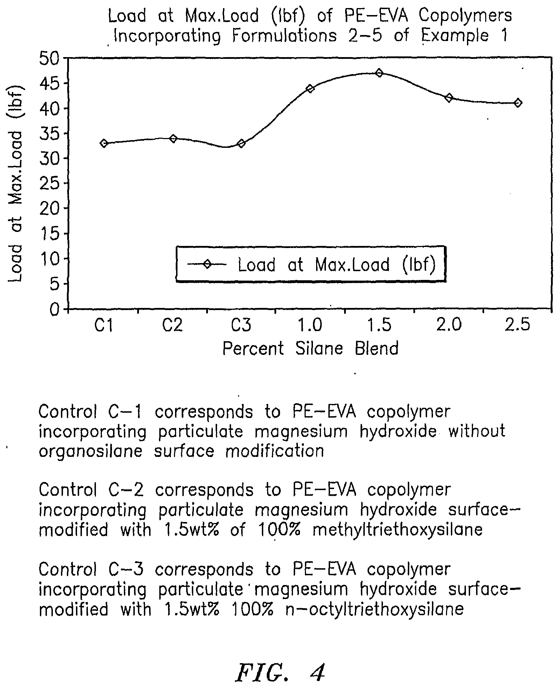

Figure 4 shows variation of load at maximum load (lbf) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations, Examples 4-7 having Mg(OH)₂ surface-modified with 1.0wt%, 1.5wt%, 2.0wt%, and 2.5wt%, respectively, of a 50:50 wt% blend of n-octyltriethoxysilane to methyltriethoxysilane (corresponding to 39-40 mole% of n-octyltriethoxysilane).

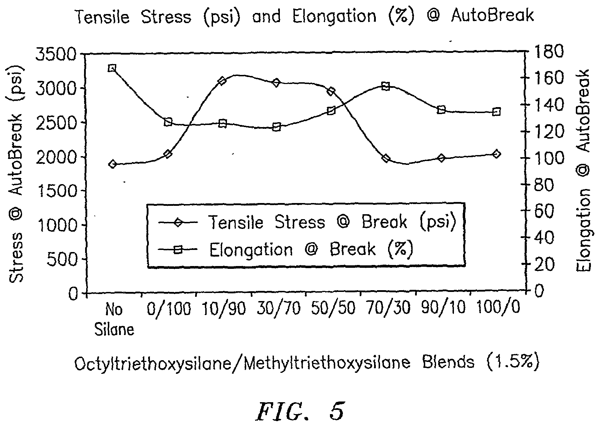

Figure 5 shows variation of tensile stress at auto break (psi) and elongation at auto break (% strain) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 8-12 having Mg(OH)₂ surface-modified with 1.5 wt% of a silane blend containing n-octyltriethoxysilane to methyltriethoxysilane weight ratios of 10:90,30:70,70:30,90:10, and 50:50, respectively (corresponding to n-octyltriethoxysilane mole percents of approximately 6.7, 21.7, 60, 85, and 39-40, respectively).

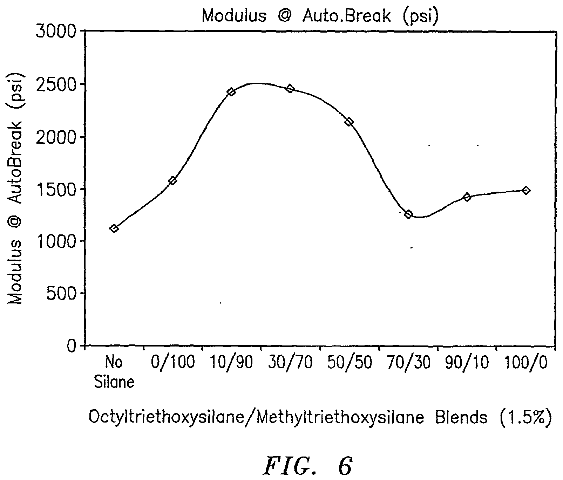

Figure 6 shows variation of modulus at auto break (psi) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 8-12 having Mg(OH)₂ surface-modified with 1.5 wt% of a silane blend containing n-octyltriethoxysilane to methyltriethoxysilane weight ratios of 10:90, 30:70, 70:30, 90:10, and 50:50, respectively (corresponding to n-octyltriethoxysilane mole percents of approximately 6.7, 21.7, 60, 85, and 39-40, respectively).

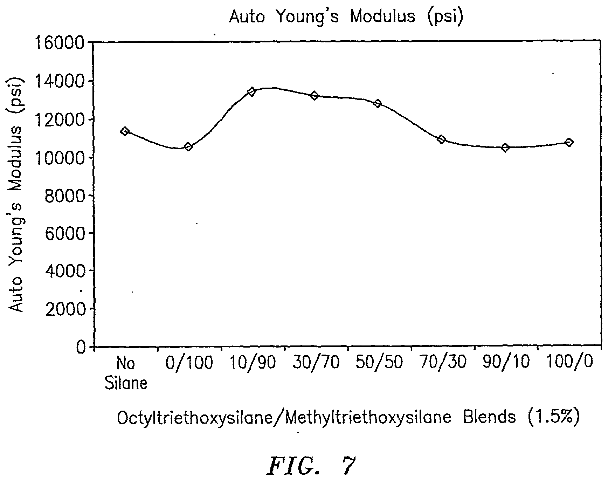

Figure 7 shows variation of Auto Young's modulus (psi) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 8-12 having Mg(OH)₂ surface-modified with 1.5 wt% of a silane blend containing n-octyltriethoxysilane to methyltriethoxysilane weight ratios of 10:90, 30:70, 70:30,90:10, and 50:50, respectively (corresponding to n-octyltriethoxysilane mole percents of approximately 6.7,21.7, 60, 85, and 39-40, respectively).

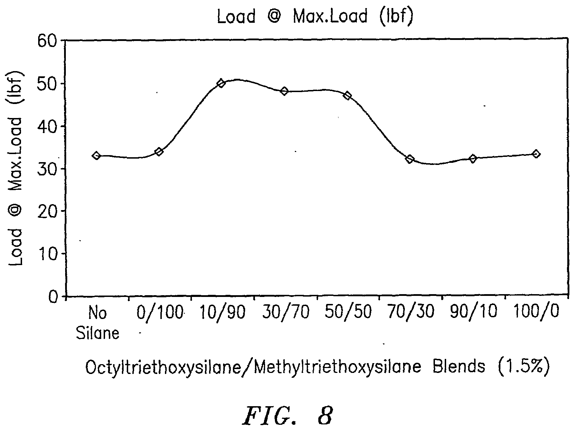

Figure 8 shows variation of load at maximum load (lbf) of polyethylene-ethylene vinyl acetate (PE-EVA) copolymers incorporating either control C-1 (Mg(OH)₂ w/ no surface modification), control C-2 (Mg(OH)₂ surface-modified w/ 100% methyltriethoxysilane), control C-3 (Mg(OH)₂ surface-modified w/ 100% n-octyltriethoxysilane), or mineral filler formulations corresponding to Examples 8-12 having Mg(OH)₂ surface-modified with 1.5 wt% of a silane blend containing n-octyltriethoxysilane to methyltriethoxysilane weight ratios of 10:90, 30:70, 70:30, 90:10, and 50:50, respectively (corresponding to n-octyltriethoxysilane mole percents of approximately 6.7, 21.7, 60, 85, and 39-40, respectively).

### DETAILED DESCRIPTION OF THE INVENTION

The polymer compositions of the present invention comprise an olefin-derived polymer component and a surface-modified non-halogenated mineral filler composition. The mineral filler composition can be included in any amount suitable for imparting a range of desired physical and non-physical properties, but is more preferably included in a flame-retarding effective amount.

In particular embodiments, the surface-modified mineral filler of the invention is incorporated in the polymer in a flame-retarding amount of forty percent to ninety percent, or fifty percent to seventy percent, by weight of the total weight of the polymer composition.

Some examples of applicable olefin-derived polymers include polyethylene-containing polymers and copolymers, polypropylene-containing polymers and copolymers, ethylene-vinyl acetate (EVA) copolymers, ethylene-ethyl acrylate (EEA) copolymers, ethylene-propylene rubbers (e.g., EPM and EPDM), styrene-butadiene rubber (SBR), nitrile butadiene (NBR), chloroprene rubber, polyvinylchloride, polyvinyl acetate, and polyisoprene.

Any auxiliary agents and additives commonly used in the art can be included in the polymer composition. For example, if desired, one or more crosslinking agents, surfactants, antioxidants (e.g., hindered phenol-based, such as Irganox 1076, or phosphite-based, such as Irgafos 168), flame retardants (e.g., phosphate-based), stabilizers, or ultraviolet absorbers (e.g., hindered amines), can be included in the polymer composition.

Any crosslinking agent suitable for crosslinking olefin-derived polymers, particularly peroxide-based crosslinking formulations, can be used, e.g., the class of crosslinking formulations under the trade name XL-Pearl (e.g., XL-Pearl 70M) available from General Electric.

The polymer compositions can be cast into numerous articles requiring flame-retarded hydrophobic polymers or plastics having suitable physical properties. For example, the polymer compositions are suitable for use in cabling, particularly low-smoke self-extinguishing wire cabling, as well as indoor and outdoor furniture.

The surface-modified non-halogenated mineral filler compositions of the present invention comprise a mineral filler core having on its surface a mixture of short-chain and long-chain organosilano groups. By a synergistic effect between the short-chain and long-chain organosilano groups on the surface of the mineral filler particle, the chemical properties of the mineral filler are improved as compared to its chemical properties with only one of either a short-chain or long-chain organosilano group. In turn, the improved chemical properties of the surface-modified mineral filler impart improved physical and mechanical properties in hydrophobic polymers into which they are incorporated, as compared to the same polymers having mineral fillers surface-modified with only one type of organosilano group.

The particulate mineral filler core can be composed of any of the mineral filler compositions known in the art comprising divalent and/or trivalent metal ions formally bound to hydroxide ions. Some classes of such mineral filler compositions include, for example, the alkaline earth hydroxides, Group IIIA hydroxides, the divalent and trivalent transition metal hydroxides, their hydrates, and combinations and mixtures thereof.

Some examples of suitable alkaline earth hydroxide mineral filler core compositions include beryllium hydroxide, magnesium hydroxide, calcium hydroxide, strontium hydroxide, and barium hydroxide. A particularly suitable alkaline earth hydroxide is magnesium hydroxide. Suitable hydroxides of magnesium include, for example, natural Mg(OH)₂ types, such as those obtained from brucite or sea water, or natural magnesium hydroxycarbonates, such as dawsonite, huntite, or hydromagnesite. The magnesium hydroxide can also be a synthetic form, such as magnesium hydroxide marketed under the trade name MAGNIFIN® available from Martinswerk GmbH.

A particularly suitable Group IIIA hydroxide mineral filler core composition is aluminum hydroxide. Suitable hydroxides of aluminum include the natural Al(OH)₃-containing materials, such as, for example, hydrargillite or gibbsite, and the AlO(OH)ₓ-containing materials (where x is variable), such as boehmite. The aluminum hydroxide can also be a synthetic form, such as aluminum hydroxide marketed under the trade name MARTIFIN® or MARTINAL® available from Martinswerk GmbH.

Other suitable particulate mineral filler core compositions include, for example, calcium aluminate, gypsum dihydrate, stannous hydroxide, thallium hydroxide, and lead hydroxide.

The particulate mineral filler core can have any suitable properties, e.g., any suitable particle size distribution, surface area, density, or purity. For example, in one embodiment, the particulate mineral filler core has a particle size in the approximate range of 0.1 to 50 microns, a surface area of between about 5 and 20 m²/g, a density of about 2.0 to 3.0 g/cm³, and a purity of about 80 to about 99 percent by weight. In another embodiment, the particulate mineral filler core has a particle size of about 0.5 to 20 microns, a surface area of between about 5 and 20 m²/g, a density of about 2.0 to 3.0 g/cm³, and a purity of about 80 to about 99 percent by weight. In still another embodiment, the particulate mineral filler core has a particle size of about 0.5 to 2 microns, a surface area of between about 5 and 20 m²/g, a density of about 2.0 to 3.0 g/cm³, and a purity of about 80 to about 99 percent by weight.

Many such particulate mineral fillers are very hydrophilic, and may bind modest amounts of water under ambient conditions. In general, this water is undesirable in a mineral filler, and will be largely removed by heating in a drying device before the mineral is incorporated into a polymer. However, the presence of small amounts of bound water in the treated mineral filler is acceptable for purposes of this invention and may even be necessary for the formation of an effective organosilane coating.

The metal hydroxide mineral filler compositions described above can optionally be combined with one or more metal oxide compositions or other filler materials. Some metal oxide compositions include the oxides of aluminum, magnesium, calcium, titanium, silicon, and zirconium. Other filler materials include talc, calcium carbonate, and calcined or non-calcined clays.

The particulate mineral filler core described above has on its surface (i) one or more short-chain organosilano groups, and (ii) one or more long-chain organosilano groups. The surface of the particulate mineral filler core is substantially covered, typically with a network of condensed organosilane molecules bound to each other through silicon-oxygen-silicon bonds. The organosilane groups on the surface of the mineral filler can be bound (i.e., covalently by silicon-oxygen-metal bonds) to metal atoms of the mineral filler surface, or alternatively, or in combination, associated with the mineral filler surface by any suitable interaction, e.g., hydrogen bonding, ionic, and/or van der Waals interactions.

The short-chain organosilano groups each have at least one and up to three silicon-bound short-chain hydrocarbon groups. The short-chain hydrocarbon groups independently contain one to three carbon atoms, and can be straight-chained or branched, and saturated or unsaturated. Some examples of such short-chain hydrocarbon groups include methyl, ethyl, n-propyl, isopropyl, vinyl, and allyl groups.

If less than three groups bound to silicon in a short-chain organosilano group are short-chain hydrocarbon groups, the remaining groups bound to the silicon of the short-chain organosilano group can be any suitable group(s) other than a hydrocarbon group. For example, the remaining group(s) bound to silicon can be hydroxyl (-OH), amino (-NR₂), halo, alkoxyl (OR), or acetoxyl (RCO₂-) groups, wherein each occurrence of R is independently selected from the group consisting of hydrogen and a hydrocarbon group containing from one to six carbon atoms. Some examples of R groups include methyl, ethyl, n-propyl, isopropyl, n-butyl, isobutyl, sec-butyl, t-butyl, n-pentyl, neopentyl, n-hexyl, cyclopropyl, cyclobutyl, cyclopentyl, cyclohexyl, and phenyl. Alternatively, one or more of the remaining groups can be a metal atom on the surface of the mineral filler core linked to the short-chain organosilano group through a silicon-oxygen-metal bond, or another short-chain organosilano group or a long-chain organosilano group linked through a silicon-oxygen-silicon bond.

In a specific embodiment, the short-chain hydrocarbon groups are any of the short-chain hydrocarbon groups described above having one or two carbon atoms, for example, methyl, ethyl, or vinyl groups.

Some examples of short-chain organosilano groups on the surface of the particulate mineral filler include CH₃-Si(OR^{a})(OR^{b})(OR^{c}), CH₃CH₂-Si(OR^{a})(OR^{b})(OR^{c}), CH₃CH₂CH₂-Si(OR^{a})(OR^{b})(OR^{c}), CH₃CH(CH₃)-Si(OR^{a})(OR^{b})(OR^{c}), (CH₃)₂Si(OR^{a})(OR^{b}), (CH₃CH₂)₂Si(OR^{a})(OR^{b}), (CH₃CH₂CH₂)₂Si(OR^{a})(OR^{b}), (CH₃CH(CH₃))₂Si(OR^{a})(OR^{b}), (CH₃)₃Si(OR^{a}), (CH₃CH₂)₃Si(OR^{a}), (CH₃CH₂CH₂)₃Si(OR^{a}), (CH₃CH(CH₃))₃Si(OR^{a}), (CH₃)(CH₃CH₂)Si(OR^{a})(OR^{b}), (CH₃)(CH₃CH₂CH₂)Si(OR^{a})(OR^{b}), (CH₃)(CH₃CH(CH₃))Si(OR^{a})(OR^{b}), (CH₃CH₂)(CH₃CH₂CH₂)Si(OR^{a})(OR^{b}), (CH₃CH₂)(CH₃CH(CH₃))Si(OR^{a})(OR^{b}), (CH₃)(CH₃CH₂)₂Si(OR^{a}), (CH₃)(CH₃CH₂CH₂)₂Si(OR^{a}), (CH₃)(CH₃CH(CH₃))₂Si(OR^{a}), (CH₃)₂(CH₃CH₂)Si(OR^{a}), (CH₃)₂(CH₃CH₂CH₂)Si(OR^{a}), (CH₃)₂(CH₃CH(CH₃))Si(OR^{a}), (CH₃CH₂)₂(CH₃CH₂CH₂)Si(OR^{a}), (CH₃CH₂)₂(CH₃CH(CH₃))Si(OR^{a}), CH₃-Si(OR^{a})Cl₂, CH₃CH₂-Si(OR^{a})(O₂CR)(OR^{c}), and CH₃CH₂CH₂-Si(OR^{a})(NR₂)(OR^{c}), wherein each occurrence of R^{a}, R^{b}, R^{c} is independently selected from the group consisting of a divalent or trivalent metal atom on the surface of the particulate mineral filler core, a silicon atom in another organosilano group, hydrogen (H), and R, wherein R is a hydrocarbon group containing one to six carbon atoms, as described above. In a specific embodiment, at least one of R^{a}, R^{b}, and R^{c} is a divalent or trivalent metal atom on the surface of the particulate mineral filler core or a silicon atom in another organosilano group.

The long-chain organosilano groups each have at least one and up to three silicon-bound long-chain hydrocarbon groups. The long-chain hydrocarbon groups independently contain eight to twelve carbon atoms, and can be straight-chained or branched, and saturated or unsaturated. The unsaturated long-chain hydrocarbon groups have at least one and up to six carbon-carbon double bonds.

Some examples of straight-chained, saturated long-chain hydrocarbon groups include n-octyl, n-nonyl, n-decyl, n-undecyl, and n-dodecyl groups.

Some examples of straight-chained, unsaturated long-chain hydrocarbon groups include 1-octenyl, 2-octenyl, 3-octenyl, 4-octenyl, 5-octenyl, 6-octenyl, 7-octenyl, 8-nonenyl, 9-decenyl, 10-undecenyl, 11-dodecenyl, 1,3-octadienyl, 1,4-octadienyl, 1,3,5-octatrienyl, and 1,3,5,7-octatetraenyl groups, wherein the hydrocarbon groups are numbered from the bond of the hydrocarbon group to the silicon atom in the organosilano group (the 1-yl reference bond).

Some examples of branched, saturated long-chain hydrocarbon groups include 1-methylheptyl, 2-methylheptyl, 3-methylheptyl, 4-methylheptyl, 5-methylheptyl, 6-methylheptyl, 1-ethylhexyl, 2-ethylhexyl, 3-ethylhexyl, 4-ethylhexyl, 1,1-dimethylhexyl, 2,2-dimethylhexyl, 3,3-dimethylhexyl, 4,4-dimethylhexyl, 5,5-dimethylhexyl, 1,2-dimethylhexyl, 1,3-dimethylhexyl, 1,4-dimethylhexyl, 1,5-dimethylhexyl, 1-methyloctyl, 2-methyloctyl, 3-methyloctyl, 4-methyloctyl, 5-methyloctyl, 6-methyloctyl, 7-methyloctyl, 6,6-dimethylheptyl, 1-methylnonyl, 2-methylnonyl, 3-methylnonyl, 4-methylnonyl, 5-methylnonyl, 6-methylnonyl, 7-methylnonyl, 8-methylnonyl, 7,7-dimethyloctyl, 9-methyldecyl, 8,8-dimethylnonyl, 10-methylundecyl, 9,9-dimethyldecyl, and 2,2,3,3-tetramethylbutyl groups.

Some examples of branched, unsaturated long-chain hydrocarbon groups include 1-methyl-1-heptenyl, 2-methyl-1-heptenyl, 3-methyl-1-heptenyl, 6-methyl-1-heptenyl, 1-methyl-2-heptenyl, 2-methyl-2-heptenyl, 3-methyl-2-heptenyl, 6-methyl-2-heptenyl, 5,5-dimethyl-2-hexenyl, 1,1-dimethyl-1-hexenyl, 1,2-dimethyl-1-hexenyl, 1-methyl-1,3-heptadienyl, and 1,2,3,4-tetramethyl-1,3-butadienyl groups.

If less than three groups bound to silicon in a long-chain organosilano group are long-chain hydrocarbon groups, the remaining groups bound to silicon can be any suitable group(s) other than a hydrocarbon group. For example, the remaining group(s) bound to silicon can be hydroxyl (-OH), amino (-NR₂), halo, alkoxyl (OR), or acetoxyl (RCO₂-) groups, wherein R is a hydrocarbon group as defined above. Alternatively, one or more of the remaining groups can be a metal atom on the surface of the mineral filler core linked to the short-chain organosilano group through a silicon-oxygen-metal bond, or another short-chain organosilano group or a long-chain organosilano group linked through a silicon-oxygen-silicon bond.

In more specific embodiments, the long-chain organosilano groups contain any of the long-chain hydrocarbon groups described above having eight to ten carbon atoms, or more specifically, eight carbon atoms. In a more specific embodiment, the long-chain hydrocarbon groups are straight-chained (i.e., n-octyl) or branched alkyl groups having eight carbon atoms.

Some examples of long-chain organosilano groups on the surface of the particulate mineral filler include CH₃(CH₂)₇-Si(OR^{a}XOR^{b})(OR^{c}), CH₃(CH₂)₈-Si(OR^{a})(OR^{b})(OR^{c}), CH₃(CH₂)₉-Si(OR^{a})(OR^{b})(OR^{c}), CH₃(CH₂)₁₀-Si(OR^{a})(OR^{b})(OR^{c}), (CH₃(CH₂)₇)₂Si(OR^{a})(OR^{b}), CH₃(CH₂)₇-Si(OR^{a})(OR^{b})(Cl), CH₃(CH₂)₇-Si(OR^{a})(OR^{b})(NHCH₃), CH₃(CH₂)₇-Si(OR^{a})(OR^{b})(O₂CCH₃) and CH₃(CH₂)-Si(OR^{a})(OR^{b})(OR^{c}), wherein each occurrence of R^{a}, R^{b}, R^{c} is independently selected from the group consisting of a divalent or trivalent metal atom on the surface of the particulate mineral filler core, a silicon atom in another organosilano group, hydrogen (H), and R, wherein R is a hydrocarbon group containing one to six carbon atoms, as described above. In a specific embodiment, at least one of R^{a}, R^{b}, and R^{c} is a divalent or trivalent metal atom on the surface of the particulate mineral filler core or a silicon atom in another organosilano group.

In one embodiment, the particulate mineral filler core is surface-modified by having on its surface any of the above-described short-chain organosilano groups having one or two carbon atoms in combination with any of the above-described long-chain organosilano groups having eight to twelve carbon atoms. In another embodiment, the particulate mineral filler core is surface-modified with methylsilano groups, i.e., CH₃-Si(OR^{a})(OR^{b})(OR^{c}) wherein R^{a}, R^{b} and R^{c} are described above, in combination with any of the above-described long-chain organosilano groups having eight to twelve carbon atoms.

In another embodiment, the particulate mineral filler core is surface-modified by having on its surface any of the above-described short-chain organosilano groups having one to three carbon atoms in combination with any of the above-described long-chain organosilano groups having eight to ten carbon atoms. In still another embodiment, the particulate mineral filler core is surface-modified with any of the short-chain organosilano groups having one to three carbon atoms in combination with saturated, and straight or branched long-chain organosilano groups having eight carbon atoms. In yet another embodiment, the particulate mineral filler core is surface-modified with any of the short-chain organosilano groups having one to three carbon atoms in combination with long-chain n-octylsilano groups, i.e., CH₃(CH₂)₇-Si(OR^{a})(OR^{b})(OR^{c}), wherein each occurrence of R^{a}, R^{b} and R^{c} is described above.

In another embodiment, the particulate mineral filler core is surface-modified by having on its surface any of the short-chain organosilano groups having one or two carbon atoms in combination with any of the long-chain organosilano groups having eight to ten carbon atoms. In still another embodiment, the particulate mineral filler core is surface-modified by having on its surface methylsilano groups in combination with any of the long-chain organosilano groups having eight to ten carbon atoms.

In yet another embodiment, the particulate mineral filler core is surface-modified by having on its surface any of the short-chain organosilano groups having one or two carbon atoms in combination with any of the long-chain organosilano groups having eight carbon atoms. In another embodiment, the particulate mineral filler core is surface-modified by having on its surface methylsilano groups in combination with any of the long-chain organosilano groups having eight carbon atoms. In still another embodiment, the particulate mineral filler core is surface-modified by having on its surface methylsilano groups in combination with n-octylsilano groups.

In one embodiment of the present invention, the long-chain organosilano groups on the surface of the particulate mineral core are preferably present in a maximum amount of up to about fifty-five mole percent of the combined molar amount of long-chain organosilano groups and short-chain organosilano groups, which corresponds to a maximum molar ratio of long-chain to short-chain organosilano groups of 1.2:1. Accordingly, the short-chain organosilano groups are preferably present in a minimum amount of at least about forty-five mole percent.

For example, in one specific embodiment, the long-chain organosilano groups on the surface of the particulate mineral core are present in a maximum amount of up to about forty mole percent (corresponding to a maximum molar ratio of long-chain to short-chain organosilano groups of 0.65:1 or 1:1.5). In other embodiments, the long-chain organosilano groups on the surface of the particulate mineral core are present in a range governed by a minimum amount equal to or greater than about three mole percent or six mole percent, and up to a maximum amount of about fifty-five percent or fifty mole percent or forty-five mole percent or forty mole percent, of the combined molar amount of long-chain and short-chain organosilano groups.

In a specific embodiment, a particulate mineral filler has on its surface a mixture of organosilano groups of formulas n-octyl-Si(OR^{a})(OR^{b})(OR^{c}) and methyl-Si(OR^{a})(OR^{b})(OR^{c}), wherein the n-octyl-Si(OR^{a})(OR^{b})(OR^{c}) groups are present in an amount of about forty mole percent and the methyl-Si(OR^{a})(OR^{b})(OR^{c}) groups are present in an amount of about sixty mole percent, where R^{a}, R^{b}, and R^{c} have been defined above.

The surface-modified mineral filler described above can further include a modified or unmodified polydimethylsiloxane-containing polymer or copolymer. More particularly, the polydimethylsiloxane-containing polymer can be a polymer belonging to the class of vinyl-modified polydimethylsiloxanes, and more particularly, vinyl-terminated polysiloxanes, such as those according to the formula CH₂=CH-(Si(CH₃)₂O)ₙ-Si(CH₃)₂-CH=CH₂ where n is any suitable integer or average number, preferably greater than 5 and up to any suitable upper number including, e.g., 10, 50, 100, 500, or greater. The polydimethylsiloxane-containing polymer can be included in any suitable weight percentage of the total weight of mineral filler, and more particularly, for example, a weight percent of 5 to 25%, or 10 to 20%, of the combined weight of the particulate mineral filler core, organosilano groups and polydimethylsiloxane-containing polymer.

The surface-modified non-halogenated mineral filler compositions of the invention can be synthesized according to any of the methods known in the art. For example, the mineral filler compositions can be produced by a process comprising reacting a particulate mineral filler core described above with: (i) one or more short-chain organosilanes within the formula R¹ₘR²ₙR³ₚSi(X)₄₋ₘ₋ₙ₋ₚ wherein R¹, R², and R³ independently represent any of the short-chain hydrocarbon groups described above having one to three carbon atoms; m, n, and p is each 0 or 1, with the proviso that at least one of m, n, and p is 1; the group X represents any group capable of reacting with surface hydroxyl groups to form a surface-oxysilane bond, and include, but are not limited to, a halo group, an amino group (-NR₂), a hydroxyl group (OH), an alkoxide group (-OR), or an acetoxyl group (RCO₂-) wherein R is hydrogen or a hydrocarbon group having one to six carbon atoms, as described above, and (ii) one or more long-chain organosilanes of the formula R⁴ₘR⁵ₙR⁶ₚSi(X)₄₋ₘ₋ₙ₋ₚ wherein R⁴, R⁵, and R⁶ independently represent any of the long-chain hydrocarbon groups described above having eight to twelve carbon atoms, and m, n, p, and X are as defined above, and wherein the long-chain and short-chain organosilane compounds are used in such relative amounts that the resulting long-chain organosilano groups on the surface of the mineral filler are in an amount of up to about fifty-five mole percent of the combined molar amount of long-chain and short-chain organosilano groups. In other embodiments, the long-chain and short-chain organosilane compounds are used in such relative amounts that the resulting long-chain organosilano groups on the surface of the mineral filler are in an amount of up to about fifty mole percent, or forty-five mole percent, or forty mole percent of the combined molar amount of long-chain and short-chain organosilano groups.

In other embodiments, the long-chain and short-chain organosilane compounds are used in such relative amounts that the molar percentage of long-chain organosilano groups on the surface of the mineral filler is equal to or greater than about three mole percent or six mole percent, and up to about fifty-five mole percent or fifty mole percent or forty-five mole percent or forty mole percent, of the combined molar amount of long-chain and short-chain organosilano groups.

In a more specific embodiment, the particulate mineral filler compositions are produced by a process comprising reacting a particulate mineral filler core described above with: (i) one or more short-chain organosilanes within the formula R¹Si(OR)₃, wherein R¹ and OR are as described above, and (ii) one or more long-chain organosilanes of the formula R⁴Si(OR)₃, wherein R⁴ and OR are as described above, wherein the long-chain organosilane compound(s) are in an amount of up to about fifty-five mole percent of the combined molar amount of short-chain and long-chain organosilane compounds.

Some examples of short-chain organosilane compounds suitable for reacting with the mineral filler core include methyltrimethoxysilane, methyltriethoxysilane, dimethyldiethoxysilane, methyltriethoxysilane, methyltri-n-propoxysilane, methyltriisopropoxysilane, methyltributoxysilane, methyltriphenoxysilane, ethyltrimethoxysilane, ethyltriethoxysilane, ethyltri-n-propoxysilane, ethyltriisopropoxysilane, vinyltrimethoxysilane, vinyltriethoxysilane, allyltrimethoxysilane, allyltriethoxysilane, n-propyltrimethoxysilane, n-propyltriethoxysilane, n-propyltriphenoxysilane, isopropyltrimethoxysilane, and isopropyltriethoxysilane.

Some examples of long-chain organosilane compounds suitable for reacting with the mineral filler core include n-octyltrimethoxysilane, n-octyltriethoxysilane, bis-(n-octyl)diethoxysilane, tris-(n-octyl)ethoxysilane, n-octyltri-n-propoxysilane, n-octyltriisopropoxysilane, n-octyltributoxysilane, n-octyltriphenoxysilane, 6-methylheptyltriethoxysilane, 7-heptenyltriethoxysilane, n-nonyltrimethoxysilane, n-nonyltriethoxysilane, n-decyltriethoxysilane, n-undecyltriethoxysilane, and n-dodecyltriethoxysilane.

In reacting the organosilane compounds with the mineral filler, the organosilane compounds can be in any suitable weight percentage. In a specific embodiment, a mixture of methyltriethoxysilane and n-octyltriethyoxysilane is included in an amount of at least about 0.5 and up to about 3.0 percent by weight, or about 1.0 to about 2.5 percent by weight, or about 1.5 percent by weight, of the combined weight of the particulate mineral filler core and organosilane compounds. To achieve the same surface coverage with other organosilanes described above, these amounts would naturally need to be adjusted upward if silanes of higher molecular weight are used, or downward for organosilanes of lower molecular weight. Similarly, when using a mineral filler with lower specific surface area, the amount of organosilane used would naturally need to be adjusted downward.

The organosilane compounds described above can be made to react with the mineral filler surface by any suitable reaction process, and more typically, via a hydrolytic reaction with hydroxyl groups and/or adsorbed water residing on the surface of the mineral filler. A catalyst such as an inorganic or organic acid, or transition metal catalysts, including but not limited to tin compounds, titanium compounds and bismuth compounds can optionally be used to facilitate the reaction, but is not preferred. For example, the organosilane compounds and particulate mineral filler can be reacted by being combined and mixed for a suitable amount of time at room temperature or elevated or depressed temperatures.

In another embodiment, the particulate mineral filler is combined with the mixture of organosilane compounds under high-speed mixing conditions, e.g., at 2000 to 3000 revolutions per minute (rpm) in a mixer, such as a Henschel mixer. Such high-speed mixing prevents the ready agglomeration of the particles and allows for more complete surface modification by the organosilanes.

After mixing the organosilane compounds with the mineral filler, the reacted mixture can be subjected to a residency period to ensure more complete reaction of the organosilanes with each other and/or with the mineral filler surface. For example, the reacted mixture can be subjected to circulating air at ambient temperature (e.g., 20°C-30°C) for at least 4-5 hours, or alternatively, to circulating air at approximately 100°C for 1-2 hours.

One or more volatile solvents, such as acetone or an ether, can be optionally included in the reaction between organosilanes and mineral filler. However, use of such solvents is not preferred since their use typically requires a subsequent removal step. The use of water and/or an aqueous catalyst, such as an acid, during the reaction is also optional, but not preferred since their use would require more drying of the treated mineral.

### EXAMPLES 1-7

Four-pound (4 lb. or 1.8 kilogram) batches of magnesium hydroxide as MAGNIFIN® were either not mixed with any silane compound (control C-1), mixed with only methyltriethoxysilane (control C-2) or n-octyltriethoxysilane (control C-3), or mixed with varying weight percentages of a 1:1 (50:50) weight ratio of n-octyltriethoxysilane to methyltriethoxysilane (formulations 4-7), in a Henschel high intensity mixer at about 2000 rpm for approximately two minutes. For each batch, except the control C-1, the MAGNIFIN® was mixed with the organosilane compound(s) by forming layers of the MAGNIFIN® (preferably four layers) in the mixer and syringing the organosilane compound(s) on each layer before mixing. A summary of the formulations used is provided in Table 1 below.

**TABLE 1**

| Surface-Modified Mineral Filler Formulations | | | | | | | |
|---|---|---|---|---|---|---|---|
| | C-1 | C-2 | C-3 | 4 | 5 | 6 | 7 |
| Magnesium Hydroxide as MAGNIFIN®¹ | 100 | 98.5 | 98.5 | 99.0 | 98.5 | 98.0 | 97.5 |
| Percentage of n-octyltriethoxysilane by weight of the total weight of n-octyltriethoxysilane and methyltriethoxysilane (weight ratio of octyltriethoxysilane to methyltriethoxysilane) | 0 | 0 | 100 | 50 (50: 50) | 50 (50: 50) | 50 (50: 50) | 50 (50: 50) |
| Corresponding mole percent n-octyltriethoxysilane² | 0 | 0 | 100 | 39-40 | 39- 40 | 39-40 | 39-40 |
| Corresponding mole percent methyltriethoxysilane³ | 0 | 100 | 0 | 60- 61 | 60-61 | 60-61 | 60-61 |
| Weight Percentage Incorporation of the Organosilane(s) in MAGNIFIN® Mineral Filler | 0 | 1.5 | 1.5 | 1.0 | 1.5 | 2.0 | 2.5 |

| | | | | | | | |
|---|---|---|---|---|---|---|---|
| ¹ Martinswerck product, powder, density = 2.39 g/cm³, bulk density = 300-400 kg/m³, particle size = 95-1.15 µm ² Molecular weight of n-octyltriethoxysilane is 276.48 g/mol ³ Molecular weight of methyltriethoxysilane is 178.3 g/mol | | | | | | | |

Twenty grams of each of the mineral filler compositions in Table 1 were taken directly from the mixer without being subjected to a residency period, and each amount was placed in a jar containing water and shaken for approximately thirty seconds. The bulk of each mineral filler settled to the bottom of the jars.

### EXAMPLE 8-12

Using the same method described above, four-pound (1.8 kg) batches of magnesium hydroxide as MAGNIFIN® were mixed with 27 grams (1.5 weight percent) of mixtures of n-octyltriethoxysilane and methyltriethoxysilane varying in mole percentage of n-octyltriethoxysilane (other than about 40 mole percent as already shown in Examples 4-7) of approximately 6.7 mole percent, 21.7 mole percent, 60.1 mole percent, and 85.3 mole percent, which correspond to weight percentage ratios of n-octyltriethoxysilane to methyltriethoxysilane of 10:90, 30:70, 70:30, and 90:10, for examples 8-11, respectively. A summary of the formulations used is provided in Table 2 below.

**TABLE 2**

| Surface-Modified Mineral Filler Formulations | | | | | |
|---|---|---|---|---|---|
| | 8 | 9 | 10 | 11 | 12 |
| Magnesium Hydroxide as MAGNIFIN®¹ | 98.5 | 98.5 | 98.5 | 98.5 | 98.5 |
| Percentage of n-octyltriethoxysilane by weight of the total weight of n-octyltriethoxysilane and methyltriethoxysilane (weight ratio of octyltriethoxysilane to methyltriethoxysilane) | 10 (10:90) | 30 (30:70) | 70 (70:30) | 90 (90:10) | 50 (43:43) |
| Corresponding mole percent n-octyltriethoxysilane² | 6.7 | 21.7 | 60.1 | 85.3 | 39-40 |
| Corresponding mole percent methyltriethoxysilane³ | 93.3 | 78.3 | 39.9 | 14.7 | 60-61 |
| Vinyl-Modified Polydimethylsiloxane | 0 | 0 | 0 | 0 | 14 |
| Weight Percentage Incorporation of the Organosilane(s) in MAGNIFIN® Mineral Filler | 1.5 | 1.5 | 1.5 | 1.5 | 1.5 |

| | | | | | |
|---|---|---|---|---|---|
| ¹Martinswerck product, powder, density = 2.39 g/cm³, bulk density = 300-400 kg/m³, particle size = .95-1.15 µm ² Molecular weight of n-octyltriethoxysilane is 276.48 g/mol ³ Molecular weight of methyltriethoxysilane is 178.3 g/mol | | | | | |

In a separate experiment, similar portions of the same mineral filler compositions in Tables 1 and 2 were taken directly from the mixer and were subjected to a residency period by being placed in an oven at ambient temperature with circulating air for 48 hours. Small amounts of each of the mineral filler compositions (e.g., 1-2 grams), now completely reacted during the residency period, were placed in jars with water and shaken. The mineral filler in the jar holding C-1 completely settled to the bottom, while the mineral filler in jars holding C-2 and C-3 showed nearly equal portions that floated and settled to the bottom.

Surprisingly, magnesium hydroxide mineral filler treated with a mixture of organosilanes having the long-chain (n-octyl) organosilane in a weight percentage to total weight of organosilanes of less than seventy percent (i.e., less than sixty mole percent), as in formulations 4-7 in Table 1 and formulations 8, 9, and 12 in Table 2, predominantly floated, along with, at most, a minor amount of settling. Any settling component for formulations 4-9 or 12 was significantly less than for controls C-2 and C-3.

Even more unexpectedly, formulations 10 and 11, which contained the long-chain (n-octyl) organosilane in a weight percentage to total weight of organosilanes of or greater than seventy percent (i.e., of or greater than sixty mole percent) settled more than formulations 4-9 or 12. The settling portions of formulations 10 and 11 were significantly greater than the settling portions of formulations 4-9 and 12.

The results of Examples 1-12 firstly demonstrate that all of the silane-treated mineral fillers, including C-2 and C-3, are more hydrophobic than mineral filler not treated with any organosilane compounds. But more significantly and unexpectedly, the results of Examples 1 to 12 above provide evidence that treated mineral fillers reacted with a combination of organosilane compounds with the long-chain hydrocarbon group (e.g., n-octyl) in an amount less than about sixty mole percent (i.e., formulations 4-9 and 12) are significantly more hydrophobic than mineral fillers reacted with only one type of organosilane (i.e., controls C-2 and C-3), and significantly more hydrophobic than formulations containing the long-chain hydrocarbon group (e.g., n-octyl) in an amount of or greater than about sixty mole percent (i.e., formulations C-3, 10, and 11).

Without being bound by any theory, it is believed that reacting the particulate mineral filler with only one type of organosilane compound leaves portions of the mineral filler surface unreacted, and hence, hydrophilic. In contrast, it is believed that by using a combination of organosilane compounds as described above, a more favorable packing or distribution of organosilane groups occurs on the mineral filler surface. This more favorable packing or distribution is believed to reduce or even prevent the formation of unreacted hydrophilic portions on the mineral filler surface.

As discussed above, the physical problems caused by mineral fillers in hydrophobic polymers are due predominantly to the poor compatibility, and hence, poor physical interaction, between the hydrophilic mineral filler particles and the hydrophobic polymer. Accordingly, by rendering the mineral filler more hydrophobic than the prior art, as accomplished by the present invention, flame-retardant polymers incorporating the surface-modified mineral fillers of the invention have improved physical properties as compared to such flame-retardant polymers using mineral fillers of the prior art.

As also discussed above, mineral fillers such as magnesium hydroxide have heretofore suffered from being significantly hygroscopic even when coated with hydrophobic surface modifiers known in the art. This ability to absorb (or adsorb) water during storage and processing creates a water-absorbed mineral filler whose incorporation into a polymer causes a host of detrimental effects in the physical properties of the polymer. Therefore, the more highly hydrophobized mineral fillers of the present invention provide the additional benefit, by virtue of their heightened resistance to the absorption of water during storage and processing, of being easier to keep dry and capable of imparting better physical properties to polymers in which they are incorporated.

The following examples describe polymer formulations incorporating the above-exemplified surface-modified mineral fillers.

### EXAMPLES 13-19

**TABLE 3**

| Polymer Formulations Incorporating the Surface-Modified Mineral Filler Formulations of Example 1-7 (Amounts in Weight Percent) | | | | | | | |
|---|---|---|---|---|---|---|---|
| Example No. | 13 | 14 | 15 | 16 | 17 | 18 | 19 |
| Filler, from Example No. | C-1 | C-2 | C-3 | 4 | 5 | 6 | 7 |
| Low Density Polyethylene LL1002.32¹ | 9.0 | 8.8 | 8.8 | 8.74 | 8.61 | 8.48 | 8.36 |
| Ultra Ethylene VinylAcetate² | 25.8 | 25 | 25 | 25.06 | 24.69 | 24.32 | 23.94 |
| Untreated Mg(OH)₂ as MAGNIFIN®³ | 65.0 | | | | | | |
| MAGNIFIN®³ treated with 1.0 wt% 50:50 silane blend⁴ | | | | 66.0 | | | |
| Example No. | 13 | 14 | 15 | 16 | 17 | 18 | 19 |
| MAGNIFIN®³ treated with 1.5 % 50:50 silane blend⁵ | | | | | 66.5 | | |
| MAGNIFIN®³ treated with 2.0 wt% 50:50 silane blend⁶ | | | | | | 67.0 | |
| MAGNIFIN®³ treated with 2.5 wt% 50:50 silane blend⁷ | | | | | | | 67.5 |
| MAGNIFIN®³ treated with 1.5 wt% of 100% methyltriethoxysilane | | 66.0 | | | | | |
| MAGNIFIN®³ treated with 1.5 wt% of 100% n-octyltriethoxysilane | | | 66.0 | | | | |
| Irganox 1076⁸ | 0.2 | 0.2 | 0.2 | 0.2 | 0.2 | 0.2 | 0.2 |

| | | | | | | | |
|---|---|---|---|---|---|---|---|
| ¹ Exxon Mobil product, granular, melt index G/10 mins. = 2.0, density = 0.918 g/cm³ ² Exxon Mobil product, pellets, melt index G/10 mins. = 2.3, 27.5% vinyl acetate, density = 0.951 g/cm³ ³ Martinswerck product, powder, density = 2.39 g/cm³, bulk density = 300-400 kg/m³, particle size = .95-1.15 µm ⁴⁻⁷Silane blend is 50:50 weight ratio of n-octyltriethoxysilane to methyltriethoxysilane as shown in Examples 1-7. ⁸ CIBA product, hindered phenol antioxidant (3-(3,5-di-tert-butyl-4-hydroxyphenol)propionate), powder | | | | | | | |

### Equipment & Operating Conditions

Preblended materials were extruded in a Werner & Pfleiderer ZSK 30mm intermeshing co-rotating twin-screw extruder, running starve-fed. The feed stream to the extruder was controlled using a metering K-Tron feeder. The extruder was vented to atmosphere to prevent the build-up of volatiles in the extruder. This reduces the porosity in extrudates and also prevents the build up of backpressure, which would restrict the feed flow in the extruder. The extrudates from a four-hole die were water quenched, air dried, and pelletized on a Cumberland pelletizer. The pelleted material was dried in an oven at 65°C overnight. The dry pelleted batches were injection molded into specimens (dog bones) in a 28 ton Arburg 1.2 oz injection mold. Extrusion conditions are summarized in Table 4.

**TABLE 4**

| Equipment and Operating Conditions | | | | | | | | |
|---|---|---|---|---|---|---|---|---|
| Extruder W&P ZSK 30mm Characeteristics | Set Temp. (°C) | Actual Temperature in °C | | | | | | |
| Example No. | | 13 | 14 | 15 | 16 | 17 | 18 | 19 |
| Zone 1 | 155 | 142 | 150 | 148 | 143 | 147 | 142 | 146 |
| Zone 2 | 160 | 165 | 165 | 167 | 170 | 166 | 167 | 176 |
| Zone 3 | 165 | 188 | 169 | 198 | 189 | 192 | 194 | 197 |
| Zone 4 | 170 | 173 | 174 | 178 | 174 | 172 | 173 | 173 |
| Zone 5 | 175 | 174 | 175 | 177 | 174 | 174 | 172 | 173 |
| Zone 6 | 180 | 178 | 187 | 182 | 174 | 180 | 180 | 181 |
| Zone 7 | -- | 188 | 190 | 205 | 190 | 190 | 190 | 198 |
| Zone 8 | -- | 194 | 195 | 203 | 200 | 200 | 200 | 200 |
| Zone 9 | -- | 189 | 198 | 200 | 192 | 190 | 192 | 195 |
| RPM | 200 | 200 | 200 | 200 | 200 | 200 | 200 | 200 |
| Die Type | 4-Hole | 4-Hole | 4-Hole | 4-Hole | 4-Hole | 4-Hole | 4-Hole | 4-Hole |
| Screw Design | ATH | ATH | ATH | ATH | ATH | ATH | ATH | ATH |
| Torque (%) | -- | 110 | 110 | 109 | 100 | 100 | 100 | 100 |
| Pressure (psi) | -- | 750 | 760 | 750 | 600 | 600 | 600 | 600 |
| Gassing: Vent | ATM | ATM | ATM | ATM | ATM | ATM | ATM | ATM |
| Auger size (Open curl) | Small | Small | Small | Small | Small | Small | Small | Small |
| Feeder (%) | -- | 64 | 65 | 63 | 57 | 57 | 57 | 57 |
| Pelletizer setting | -- | 1.0 | 1.0 | 1.1 | 0.5 | 1.0 | 1.0 | 1.0 |

### Mechanical Properties

Molded dog bone specimens were allowed to thermally equilibrate at 22°C for 48 hours. Tensile strength, elongation, modulus at break, modulus (AutoYoung) and load at maximum load were determined according to ASTM 638 using a crosshead speed of 20.0 inches per minute for all samples. Melt flow rates (ASTM 1238) were measured on an extrusion plastometer using 21.6 kg at 190°C. Mechanical properties of polymer specimens incorporating the mineral filler formulations of Example 1-7 are shown in Table 5 below.

**TABLE 5**

| Mechanical Properties of Polymer Specimens Incorporating the Mineral Filler Formulations of Example 1-7 | | | | | | | |
|---|---|---|---|---|---|---|---|
| Ingredients | Example Nos. | | | | | | |
| | 13 | 14 | 15 | 16 | 17 | 18 | 19 |
| Filler, from Example | C-1 | C-2 | C-3 | 4 | 5 | 6 | 7 |
| Mechanical Properties | | | | | | | |
| Tensile stress @ Auto Break (psi) | 1901 | 2060 | 2017 | 2755 | 2944 | 2630 | 2552 |
| % Strain @ Auto Break (Elongation at Break) | 169 | 130 | 137 | 142 | 137 | 142 | 145 |
| Modulus @ Auto Break (psi) | 1125 | 1585 | 1494 | 1943 | 2146 | 1856 | 1755 |
| Auto Young's Modulus (psi) | 11353 | 10560 | 10702 | 11948 | 12804 | 12093 | 11542 |
| Load at Max.Load (lbf) | 33 | 34 | 33 | 44 | 47 | 42 | 41 |
| Melt Flow (grams/10 min.) | 7.7 | 5.4 | 5.7 | 5.15 | 4.31 | 5.65 | 5.94 |

The results shown in Table 5 have been charted according to mechanical properties, as shown in Figures 1-4. Figure 1 shows the variation of both tensile stress and strain (elongation at auto break), Figure 2 the variation of modulus at auto break, Figure 3 the variation of Auto Young's modulus, and Figure 4 the variation of load at maximum load, according to the formulations in Table 5.

Most significantly, as shown in Table 5 and Figures 1-4, polymer formulations containing particulate magnesium hydroxide treated with silane blends according to Examples 16-19 (i.e., formulations 4-7) showed significantly higher tensile stress than either untreated magnesium hydroxide (control C-1) or magnesium hydroxide treated with only methyltriethoxysilane (control C-2) or magnesium hydroxide treated with only n-octyltriethoxysilane (control C-3). Since tensile stress can be regarded as one of the most important physical properties reflective of the integrity of a polymer, the latter unexpected finding confirms the superior properties of the surface-modified mineral fillers of the present invention when incorporated into a hydrophobic polymer.

The modulus at auto break and also the AutoYoung's modulus for samples treated with silane blends according to Examples 16-19 (i.e., formulations 4-7) are also significantly higher than Examples 13-15, the polymer formulations containing the mineral filler control formulations C-1, C-2, or C-3, respectively. The load at maximum load for Examples 16-19 are also higher than the load at maximum load values of the controls.

As can be observed from Figures 1-4, the most improved tensile stress, modulus at auto break, Auto Young's modulus, and load at maximum load properties are observed for Example 17, the polymer formulation containing mineral filler formulation 5, which contains approximately 1.5% by weight of incorporation of the silane blend in the particulate magnesium hydroxide.

### EXAMPLES 20-27

The mineral filler formulations of Examples 8-12 were incorporated into hydrophobic polymers according to the formulations shown in Tables 6 and 7 (below) using the same operating procedures and conditions summarized in Table 4 in Examples 13-19 above. The resulting polymer specimens were then tested for mechanical properties, the results of which are summarized in Table 8. Example 23, which contains mineral formulation 5, has been included in Tables 6-8 for reference.

**TABLE 6**

| Polymer Formulations Incorporating Surface-Modified Mineral Filler Formulations Varying in Organosilane Blend Ratio (Amounts in Weight Percent) | | | | | | | | | |
|---|---|---|---|---|---|---|---|---|---|
| Example No. | 20 | 21 | 22 | 23 | 24 | 25 | 26 | 27 | 28 |
| Filler, from Example | C2 | 8 | 9 | 5 | 10 | 11 | C3 | 12 | C1 |
| Linear Low Density Polyethylene LL1002.32 | 8.8 | 8.8 | 8.8 | 8.8 | 8.8 | 8.8 | 8.8 | 8.8 | 8.8 |
| Ultra Ethylene Vinyl Acetate | 25 | 25 | 25 | 25 | 25 | 25 | 25 | 25 | 25 |
| Untreated Mg(OH)₂ as MAGNIFIN® | | | | | | | | | 66 |
| Mg(OH)₂ treated with 1.5wt% of 100wt% methyltriethoxysilane | 66 | | | | | | | | |
| Mg(OH)₂ treated with 1.5wt% of 10wt% (∼6.7 mole%) n-octyltriethoxysilane / 90wt% (∼93.3 mole%) methyltriethoxysilane blend | | 66 | | | | | | | |
| Mg(OH)₂ treated with 1.5wt% of 30wt% (∼21.7 mole%) n-octyltriethoxysilane / 70wt% (∼78.3 mole%) methyltriethoxysilane blend | | | 66 | | | | | | |
| Mg(OH)₂ treated with 1.5wt% of 50wt% (∼39.3 mole%) n-octyltriethoxysilane / 50wt% (∼60.7 mole%) methyltriethoxysilane blend | | | | 66 | | | | | |
| Mg(OH)₂ treated with 1.5wt% of 70wt% (∼60.1 mole%) n-octyltriethoxysilane / 30wt% (∼39.9 mole%) methyltriethoxysilane blend | | | | | 66 | | | | |
| Mg(OH)₂ treated with 1.5wt% of 90wt% (∼85.3 mole%) n-octyltriethoxysilane / 10wt% (∼14.7 mole%) methyltriethoxysilane blend | | | | | | 66 | | | |
| Example No. | 20 | 21 | 22 | 23 | 24 | 25 | 26 | 27 | 28 |
| Mg(OH)₂ treated with 1.5wt% of 100wt% n-octyltriethoxysilane | | | | | | | 66 | | |
| Mg(OH)₂ treated with 1.5wt% of 43wt% octyltriethoxysilane / 43wt% methyltriethoxysilane blend, 14wt% vinyl-modified polydimethylsiloxane* | | | | | | | | 66 | |
| Irganox 1076** | 0.2 | 0.2 | 0.2 | 0.2 | 0.2 | 0.2 | 0.2 | 0.2 | |

| | | | | | | | | | |
|---|---|---|---|---|---|---|---|---|---|
| *vinyl-modified polydimethylsiloxane used was a vinyl end-blocked polydimethylsiloxane fluid having a viscosity @ 25°C of ∼2000cSt, wt% vinyl content of 0.24, specific gravity at 25°C of 0.97, and chemical formula CH₂=CH-(Si(CH₃)₂O)ₙ-Si(CH₃)₂-CH=CH₂ where n is greater than 5. **CIBA product, hindered phenol antioxidant (3-(3,5-di-tert-butyl-4-hydroxyphenol)propionate), powder | | | | | | | | | |

**TABLE 7**

| Polymer Formulations Incorporating Surface-Modified Mineral Filler Formulations Varying in Organosilane Blend Ratio (Amounts in Grams) | | | | | | | | | |
|---|---|---|---|---|---|---|---|---|---|
| Example No. | 20 | 21 | 22 | 23 | 24 | 25 | 26 | 27 | 28 |
| Filler, From Example; | C-2 | 8 | 9 | 5 | 10 | 11 | C-3 | 12 | C-1 |
| Ingredients | | | | | | | | | |
| Linear Low Density Polyethylene LL1002.32 | 196.76 | 196.76 | 196.76 | 196.76 | 196.76 | 196.76 | 196.76 | 196.76 | 196.76 |
| Ultra Ethylene Vinyl Acetate | 567.5 | 567.5 | 567.5 | 567.5 | 567.5 | 567.5 | 567.5 | 567.5 | 567.5 |
| Untreated Mg(OH)₂ as MAGNIFIN® | | | | | | | | | 1498.2 |
| Magnesium hydroxide treated with 1.5wt% of 100wt% methyltriethoxysilane | 1498.2 | | | | | | | | |
| Example No. | 20 | 21 | 22 | 23 | 24 | 25 | 26 | 27 | 28 |
| Magnesium hydroxide treated with 1.5wt% of 10wt% n-octyltriethoxysilane/90wt% methyltriethoxysilane blend | | 1498.2 | 1498.2 | | | | | | |
| Magnesium hydroxide treated with 1.5wt% of 30wt% n-octyltriethoxysilane/70wt% methyltriethoxysilane blend | | | 1498.2 | | | | | | |
| Magnesium hydroxide treated with 1.5wt% of 50wt% n-octyltriethoxysilane/50wt% methyltriethoxysilane blend | | | | 1498.2 | | | | | |
| Magnesium hydroxide treated with 1.5wt% of 70wt% n-octyltriethoxysilane/ 30wt% methyltriethoxysilane blend | | | | | 1498.2 | | | | |
| Magnesium hydroxide treated with 1.5wt% of 90wt% n-ootyltriethoxysilane/10wt% methyltriethoxysilane blend | | | | | | 1498.2 | | | |
| Magnesium hydroxide treated with 1.5wt% of 100wt% n-octyltriethoxysilane | | | | | | | 1498.2 | | |
| Magnesium hydroxide treated with 1.5wt% of 43wt% octyltriethoxysilane / 43wt% methyltriethoxysilane blend, 14wt% vinyl-modified polydimethylsiloxane* | | | | | | | | 1498.2 | |
| Irganox 1076** | 4.54 | 4.54 | 4.54 | 4.54 | 4.54 | 4.54 | 4.54 | 4.54 | |

| | | | | | | | | | |
|---|---|---|---|---|---|---|---|---|---|
| *vinyl-modified polydimethylsiloxane used was a vinyl end-blocked polydimethylsiloxane fluid having a viscosity @ 25°C of ∼2000cSt, wt% vinyl content of 0.24, specific gravity at 25°C of 0.97, and chemical formula CH₂=CH-(Si(CH₃)₂O)ₙ-Si(CH₃)₂-CH=CH₂ where n is greater than 5. **CIBA product, hindered phenol antioxidant (3-(3,5-di-tert-butyl-4-hydroxyphenol)propionate), powder | | | | | | | | | |

**TABLE 8**

| Mechanical Properties of Polymer Formulations Shown in Tables 6 and 7 | | | | | | | | | |
|---|---|---|---|---|---|---|---|---|---|
| Example No. | 20 | 21 | 22 | 23 | 24 | 25 | 26 | 27 | 28 |
| Filler, From Example | C-2 | 8 | 9 | 5 | 10 | 11 | C-3 | 12 | C-1 |
| Mechanical Properties | | | | | | | | | |
| Tensile stress @ Auto Break (psi) | 2060 | 3100 | 3070 | 2942 | 1964 | 1961 | 2017 | 2468 | 1901 |
| % Strain @ Auto Break (Elongation at Break) | 130 | 128 | 125 | 137 | 155 | 137 | 137 | 170 | 169 |
| Modulus @ Auto Break (psi) | 1585 | 2422 | 2455 | 2147 | 1267 | 1431 | 1494 | 1452 | 1125 |
| Auto Young's Modulus (psi) | 10560 | 13408 | 13205 | 12804 | 10901 | 10439 | 10702 | 11307 | 11353 |
| Load at Max.Load (lbf) | 34 | 50 | 48 | 47 | 32 | 32 | 33 | 39 | 33 |
| Melt Flow (grams/10 min.) | 5.4 | 4.2 | 4.1 | 4.31 | 5.9 | 6.2 | 5.7 | 6.0 | 7.7 |

The results shown in Table 8 have been charted according to mechanical properties, as shown in Figures 5-8. Figure 5 shows the variation of both tensile stress and strain (elongation at auto break), Figure 6 the variation of modulus at auto break, Figure 7 the variation of Auto Young's modulus, and Figure 8 the variation of load at maximum load, according to the Examples (formulations) 20-28 as summarized in Table 7.

As is apparent from Table 8 and Figures 5-8, the tensile stress and other properties are significantly improved for polymer formulations containing a mineral filler surface-modified with a blend of organosilane groups having the long-chain (e.g., n-octyl) hydrocarbon groups in an amount less than sixty mole percent, i.e., Examples 21-23 and 27, as compared to formulations containing a mineral filler surface-modified with a blend of organosilanes having long-chain hydrocarbon groups in an amount of or greater than a critical amount of about sixty mole percent, as in Examples 24, 25 and 26. For example, Example 24 shows tensile stress properties which are no longer improved in comparison to the controls Example 28 (no surface modification), Example 20 (100% methyltriethoxysilane), or Example 26 (100% n-octyltriethoxysilane).

## Claims

1. A polymer composition comprising an olefin-derived polymer component and a surface-modified non-halogenated mineral filler composition comprising a particulate mineral filler core comprising hydroxide groups bound to divalent or trivalent metal ions, said particulate mineral filler core having on its surface
(i) one or more short-chain organosilano groups independently selected from the group consisting of CH₃-Si(OR^{a})(OR^{b})(OR^{c}), CH₃CH₂-Si(OR^{a})(OR^{b})(OR^{c}), CH₃CH₂CH₂-Si(OR^{a})(OR^{b})(OR^{c}), CH₃CH(CH₃)-Si(OR^{a})(OR^{b})(OR^{c}), (CH₃)₂Si(OR^{a})(OR^{b}), (CH₃CH₂)₂Si(OR^{a})(OR^{b}), (CH₃CH₂CH₂)₂Si(OR^{a})(OR^{b}), (CH₃CH(CH₃))₂Si(OR^{a})(OR^{b}), (CH₃)₃Si(OR^{a}), (CH₃CH₂)₃Si(OR^{a}), (CH₃CH₂CH₂)₃Si(OR^{a}), (CH₃CH(CH₃))₃Si(OR^{a}), (CH₃)(CH₃CH₂)Si(OR^{a})(OR^{b}), (CH₃)(CH₃CH₂CH₂)Si(OR^{a})(OR^{b}), (CH₃)(CH₃CH(CH₃))Si(OR^{a})(OR^{b}), (CH₃CH₂)(CH₃CH₂CH₂)Si(OR^{a})(OR^{b}), (CH₃CH₂)(CH₃CH(CH₃))Si(OR^{a})(OR^{b}), (CH₃)(CH₃CH₂)₂Si(OR^{a}), (CH₃)(CH₃CH₂CH₂)₂Si(OR^{a}), (CH₃)(CH₃CH(CH₃))₂Si(OR^{a}), (CH₃)₂(CH₃CH₂)Si(OR^{a}), (CH₃)₂(CH₃CH₂CH₂)Si(OR^{a}), (CH₃)₂(CH₃CH(CH₃))Si(OR^{a}), (CH₃CH₂)₂(CH₃CH₂CH₂)Si(OR^{a}), (CH₃CH₂)₂(CH₃CH(CH₃))Si(OR^{a}), CH₃-Si(OR^{a})Cl₂, CH₃CH₂-Si(OR^{a})(O₂CR)(OR^{c}), and CH₃CH₂CH₂-Si(OR^{a})(NR₂)(OR^{c}); and
(ii) one or more long-chain organosilano groups independently selected from the group consisting of CH₃(CH₂)₇-Si(OR^{a})(OR^{b})(OR^{c}), CH₃(CH₂)₈-Si(OR^{a})(OR^{b})(OR^{c}), CH₃(CH₂)₉-Si(OR^{a})(OR^{b})(OR^{c}), CH₃(CH₂)₁₀-Si(OR^{a})(OR^{b})(OR^{c}), (CH₃(CH₂)₇)₂Si(OR^{a})(OR^{b}), CH₃(CH₂)₇-Si(OR^{a})(OR^{b})(Cl), CH₃(CH₂)₇-Si(OR^{a})(OR^{b})(NHCH₃), CH₃(CH₂)₇-Si(OR^{a})(OR^{b})(O₂CCH₃), and CH₃(CH₂)ₙ-Si(OR^{a})(OR^{b})(OR^{c});
wherein each occurrence of R^{a}, R^{b}, R^{c} is independently selected from the group consisting of a divalent or trivalent metal atom on the surface of the particulate mineral filler core, a silicon atom in another organosilano group, hydrogen, and R, wherein R is a hydrocarbon group containing one to six carbon atoms; and
wherein the long-chain organosilano groups are present in an amount of equal to or greater than three mole percent and up to fifty-five mole percent of combined molar amount of long-chain and short-chain organosilano groups.

2. The polymer composition of claim 1, wherein the surface-modified non-halogenated mineral filler composition is in an amount of fifty to seventy percent by weight of combined weight of the olefin-derived polymer component and mineral filler composition.

3. The polymer composition of claim 1, wherein the olefin-derived polymer component is a polyethylene-containing polymer or copolymer.

4. The polymer composition of claim 1, wherein the olefin-derived polymer component is a polypropyene-containing polymer or copolymer.

5. The polymer composition of claim 1, wherein the olefin-derived polymer component is an ethylene-vinyl acetate copolymer.

6. The polymer composition of claim 1, wherein the long-chain organosilano groups are present in an amount equal to or greater than six mole percent and up to fourty mole percent of combined molar amount of long-chain and short-chain organosilano groups.

7. The composition of claim 1, wherein the long-chain hydrocarbon groups contain eight carbon atoms.

8. The composition of claim 1, wherein the short-chain hydrocarbon groups are methyl groups.

9. The composition of claim 1, wherein the short-chain hydrocarbon groups are methyl groups, and wherein the long-chain hydrocarbon groups contain eight carbon atoms.

10. The composition of claim 1, wherein the particulate mineral filler core is selected from the group consisting of beryllium hydroxide, magnesium hydroxide, magnesium hydroxycarbonates, calcium hydroxide, strontium hydroxide, barium hydroxide, aluminum hydroxide, hydrargillite, gibbsite, boehmite, calcium aluminate, gypsum dihydrate, stannous hydroxide, thallium hydroxide, lead hydroxide and mixtures thereof.

11. A wire cable comprising an electrical conductor and a flame-retardant coating, the flame-retardant coating comprising a composition of any preceding claim having incorporated therein a flame-retarding amount of the surface-modified non-halogenated mineral filler composition.

## Patentansprüche

1. Polymerzusammensetzung, welche eine aus Olefin gewonnene Polymerkomponente und eine oberflächenmodifizierte nicht-halogenierte mineralische Füllstoffzusammensetzung mit einem Kern aus partikulärem mineralischen Füllstoff umfasst, der an bivalente oder trivalente Metallionen gebundene Hydroxidgruppen umfasst, wobei der Kern aus partikulärem mineralischen Füllstoff auf seiner Oberfläche aufweist:
(i) ein oder mehrere kurzkettige Organosilangruppen unabhängig gewählt aus der Gruppe bestehend aus CH₃-Si(OR^{a})(OR^{b})(OR^{c}), CH₃CH₂-Si(OR^{a})(OR^{b})(OR^{c}), CH₃CH₂CH₂-Si(OR^{a})(OR^{b})(OR^{c}), CH₃CH(CH₃)-Si(OR^{a})(OR^{b})(OR^{c}), (CH₃)₂Si(OR^{a})(OR^{b}), (CH₃CH₂)₂Si(OR^{a})(OR^{b}), (CH₃CH₂CH₂)₂Si(OR^{a})(OR^{b}), (CH₃CH(CH₃))₂Si(OR^{a})(OR^{b}), (CH₃)₃Si(OR^{a}), (CH₃CH₂)₃Si(OR^{a}), (CH₃CH₂CH₂)₃Si(OR^{a}), (CH₃CH(CH₃))₃Si(OR^{a}), (CH₃)(CH₃CH₂)Si(OR^{a})(OR^{b}), (CH₃)(CH₃CH₂CH₂)Si(OR^{a})(OR^{b}), (CH₃)(CH₃CH(CH₃))Si(OR^{a})(OR^{b}), (CH₃CH₂)(CH₃CH₂CH₂)Si(OR^{a})(OR^{b}), (CH₃CH₂)(CH₃CH(CH₃))Si(OR^{a})(OR^{b}), (CH₃)(CH₃CH₂)₂Si(OR^{a}), (CH₃)(CH₃CH₂CH₂)₂Si(OR^{a}), (CH₃)(CH₃CH(CH₃))₂Si(OR^{a}), (CH₃)₂(CH₃CH₂)Si(OR^{a}), (CH₃)₂(CH₃CH₂CH₂)Si(OR^{a}), (CH₃)₂(CH₃CH(CH₃))Si(OR^{a}), (CH₃CH₂)₂(CH₃CH₂CH₂)Si(OR^{a}), (CH₃CH₂)₂(CH₃CH(CH₃))Si(OR^{a}), CH₃-Si(OR^{a})Cl₂, CH₃CH₂-Si(OR^{a})(O₂CR)(OR^{c}) und CH₃CH₂CH₂-Si(OR^{a})(NR₂)(OR^{c}); und
(ii) ein oder mehrere langkettige Organosilangruppen unabhängig gewählt aus der Gruppe bestehend aus
CH₃(CH₂)₇-Si(OR^{a})(OR^{b})(OR^{c}), CH₃(CH₂)₈-Si(OR^{a})(OR^{b})(OR^{c}), CH₃(CH₂)₉-Si(OR^{a})(OR^{b})(OR^{c}), CH₃(CH₂)₁₀-Si(OR^{a})(OR^{b})(OR^{c}), (CH₃(CH₂)₇)₂Si(OR^{a})(OR^{b}), CH₃(CH₂)₇-Si(OR^{a})(OR^{b})(Cl), CH₃(CH₂)₇-Si(OR^{a})(OR^{b})(NHCH₃), CH₃(CH₂)₇-Si(OR^{a})(OR^{b})(O₂CCH₃) und CH₃(CH₂)₁₁-Si(OR^{a})(OR^{b})(OR^{c});
wobei jedes Vorkommen von R^{a}, R^{b}, R^{c} unabhängig gewählt ist aus der Gruppe bestehend aus einem bivalenten oder trivalenten Metallatom an der Oberfläche des Kerns aus partikulärem mineralischen Füllstoff, einem Siliciumatom in einer anderen Organosilangruppe, Wasserstoff und R, wobei R eine Kohlenwasserstoffgruppe ist, die ein bis sechs Kohlenstoffatome enthält; und
wobei die langkettigen Organosilangruppen in einer Menge von größer oder gleich drei Molprozent und bis zu fünfundfünfzig Molprozent der kombinierten Molmenge langkettiger und kurzkettiger Organosilangruppen vorhanden sind.

2. Polymerzusammensetzung nach Anspruch 1, wobei die oberflächenmodifizierte nicht-halogenierte mineralische Füllstoffzusammensetzung in einer Menge von fünfzig bis siebzig Gewichtsprozent des kombinierten Gewichts der aus Olefin gewonnenen Polymerkomponente und der mineralischen Füllstoffzusammensetzung vorliegt.

3. Polymerzusammensetzung nach Anspruch 1, wobei die aus Olefin gewonnene Polymerkomponente ein polyethylenhaltiges Polymer oder Copolymer ist.

4. Polymerzusammensetzung nach Anspruch 1, wobei die aus Olefin gewonnene Polymerkomponente ein polypropylenhaltiges Polymer oder Copolymer ist.

5. Polymerzusammensetzung nach Anspruch 1, wobei die aus Olefin gewonnene Polymerkomponente ein Ethylen-Vinylacetat-Copolymer ist.

6. Polymerzusammensetzung nach Anspruch 1, wobei
die langkettigen Organosilangruppen in einer Menge von größer oder gleich sechs Molprozent und bis zu vierzig Molprozent der kombinierten Molmenge langkettiger und kurzkettiger Organosilangruppen vorhanden sind.

7. Zusammensetzung nach Anspruch 1, wobei
die langkettigen Kohlenwasserstoffgruppen acht Kohlenstoffatome enthalten.

8. Zusammensetzung nach Anspruch 1, wobei
die kurzkettigen Kohlenwasserstoffgruppen Methylgruppen sind.

9. Zusammensetzung nach Anspruch 1, wobei
die kurzkettigen Kohlenwasserstoffgruppen Methylgruppen sind und wobei die langkettigen Kohlenwasserstoffgruppen acht Kohlenstoffatome enthalten.

10. Zusammensetzung nach Anspruch 1, wobei
der Kern aus partikulärem mineralischen Füllstoff gewählt ist aus der Gruppe bestehend aus Berylliumhydroxid, Magnesiumhydroxid, Magnesiumhydroxycarbonaten, Calciumhydroxid, Strontiumhydroxid, Bariumhydroxid, Aluminiumhydroxid, Hydrargillit, Gibbsit, Böhmit, Calciumaluminat, Gips-Dihydrat, Zinn(II)-hydroxid, Thalliumhydroxid, Bleihydroxid und Mischungen derselben.

11. Drahtkabel, welches einen elektrischen Leiter und eine flammenhemmende Beschichtung umfasst, wobei die flammenhemmende Beschichtung eine Zusammensetzung nach einem vorherigen Anspruch, die darin integriert eine flammenhemmende Menge der oberflächenmodifizierten nicht-halogenierten mineralischen Füllstoffzusammensetzung aufweist, umfasst.

## Revendications

1. Composition polymère comprenant un composant polymère dérivé d'oléfine et une composition de charge minérale non halogénée modifiée en surface comprenant un noyau de charge minérale particulaire comprenant des groupes hydroxyde liés à des ions de métal divalent ou trivalent, ledit noyau de charge minérale particulaire ayant à sa surface
(i) un ou plusieurs groupes organosilano à chaîne courte choisis indépendamment dans le groupe constitué de CH₃-Si(OR^{a})(OR^{b})(OR^{c}), CH₃CH₂-Si(OR^{a})(OR^{b})(OR^{c}), CH₃CH₂CH₂-Si(OR^{a})(OR^{b})(OR^{c}), CH₃CH(CH₃)-Si(OR^{a})(OR^{b})(OR^{c}), (CH₃)₂Si(OR^{a})(OR^{b}), (CH₃CH₂)₂Si(OR^{a})(OR^{b}), (CH₃CH₂CH₂)₂Si(OR^{a})(OR^{b}), (CH₃CH(CH₃))₂Si(OR^{a})(OR^{b}), (CH₃)₃Si(OR^{a}), (CH₃CH₂)₃Si(OR^{a}), (CH₃CH₂CH₂)₃Si(OR^{a}), (CH₃CH(CH₃))₃Si(OR^{a}), (CH₃)(CH₃CH₂)Si(OR^{a})(OR^{b}), (CH₃)(CH₃CH₂CH₂)Si(OR^{a})(OR^{b}), (CH₃)(CH₃CH(CH₃))Si(OR^{a})(OR^{b}), (CH₃CH₂)(CH₃CH₂CH₂)Si(OR^{a})(OR^{b}), (CH₃CH₂)(CH₃CH(CH₃))Si(OR^{a})(OR^{b}), (CH₃)(CH₃CH₂)₂Si(OR^{a}), (CH₃)(CH₃CH₂CH₂)₂Si(OR^{a}), (CH₃)(CH₃CH(CH₃))₂Si(OR^{a}), (CH₃)₂(CH₃CH₂)Si(OR^{a}), (CH₃)₂(CH₃CH₂CH₂)Si(OR^{a}), (CH₃)₂(CH₃CH(CH₃))Si(OR^{a}), (CH₃CH₂)₂(CH₃CH₂CH₂)Si(OR^{a}), (CH₃CH₂)₂(CH₃CH(CH₃))Si(OR^{a}), CH₃-Si(OR^{a})Cl₂, CH₃CH₂-Si(OR^{a})(O₂CR)(OR^{c}) et CH₃CH₂CH₂-Si(OR^{a})(NR₂)(OR^{c}); et
(ii) un ou plusieurs groupes organosilano à chaîne longue choisis indépendamment dans le groupe constitué de CH₃(CH₂)₇-Si(OR^{a})(OR^{b})(OR^{c}),CH₃(CH₂)₈-Si(OR^{a})(OR^{b})(OR^{c}), CH₃(CH₂)₉-Si(OR^{a})(OR^{b})(OR^{c}), CH₃(CH₂)₁₀-Si(OR^{a})(OR^{b})(OR^{c}), (CH₃(CH₂)₇)₂Si(OR^{a})(OR^{b}), CH₃(CH₂)₇-Si(OR^{a})(OR^{b})(Cl), CH₃(CH₂)₇-Si(OR^{a})(OR^{b})(NHCH₃), CH₃(CH₂)₇-Si(OR^{a})(OR^{b})(O₂CCH₃), et CH₃(CH₂)₁₁-Si(OR^{a})(OR^{b})(OR^{c});
où chaque occurrence de R^{a}, R^{b}, R^{c} est choisie indépendamment dans le groupe constitué d'un atome de métal divalent ou trivalent à la surface du noyau de charge minérale particulaire, d'un atome de silicium d'un autre groupe organosilano, d'hydrogène et de R, où R est un groupe hydrocarbure contenant de un à six atomes de carbone ; et
où les groupes organosilano à chaîne longue sont présents en une quantité égale ou supérieure à trois pour-cent en mole et jusqu'à cinquante-cinq pour-cent en mole de quantité molaire combinée de groupes organosilano à chaîne longue et chaîne courte.

2. Composition polymère selon la revendication 1, dans laquelle la composition de charge minérale non halogénée modifiée en surface est en une quantité de cinquante à soixante-dix pour-cent en poids du poids combiné du composant polymère dérivé d'oléfine et de la composition de charge minérale.

3. Composition polymère selon la revendication 1, dans laquelle le composant polymère dérivé d'oléfine est un polymère ou un copolymère contenant du polyéthylène.

4. Composition polymère selon la revendication 1, dans laquelle le composant polymère dérivé d'oléfine est un polymère ou un copolymère comprenant du polypropylène.

5. Composition polymère selon la revendication 1, dans laquelle le composant polymère dérivé d'oléfine est un copolymère éthylène-acétate de vinyle.

6. Composition polymère selon la revendication 1, dans laquelle les groupes organosilano à chaîne longue sont présents en une quantité égale ou supérieure à six pour-cent en mole et jusqu'à quarante pour-cent en mole de la quantité molaire combinée de groupes organosilano à chaîne longue et chaîne courte.

7. Composition selon la revendication 1, dans laquelle
les groupes hydrocarbure à chaîne longue contiennent huit atomes de carbone.

8. Composition selon la revendication 1, dans laquelle
les groupes hydrocarbure à chaîne courte sont des groupes méthyle.

9. Composition selon la revendication 1, dans laquelle
les groupes hydrocarbure à chaîne courte sont des groupes méthyle et les groupes hydrocarbure à chaîne longue contiennent huit atomes de carbone.

10. Composition selon la revendication 1, dans laquelle
le noyau de charge minérale particulaire est choisi dans le groupe constitué d'hydroxyde de béryllium, hydroxyde de magnésium, hydroxycarbonates de magnésium, hydroxyde de calcium, hydroxyde de strontium, hydroxyde de baryum, hydroxyde d'aluminium, hydrargillite, gibbsite, boehmite, aluminate de calcium, gypse dihydraté, hydroxyde stanneux, hydroxyde de thallium, hydroxyde de plomb et mélanges de ceux-ci.

11. Câble de fil métallique comprenant un conducteur électrique et un revêtement ignifuge, le revêtement ignifuge comprenant une composition selon une quelconque revendication précédente dans laquelle est incorporée une quantité ignifugeante de la composition de charge minérale non halogénée modifiée en surface.
